Europäisches Patentamt

European Patent Office

Office européen des brevets

(11) Publication number: **0 365 017**
**A2**

# (12) EUROPEAN PATENT APPLICATION

(21) Application number: **89119442.5**

(22) Date of filing: **19.10.89**

(51) Int. Cl.5: **G01G 21/24**

(30) Priority: **21.10.88 ES 8803203**

(43) Date of publication of application:
**25.04.90 Bulletin 90/17**

(84) Designated Contracting States:
**DE ES FR IT**

(71) Applicant: **Aragall Puig, Miguel**
**Avda. Alfonso XIII, 604**
**E-08913 Badalona (Barcelona)(ES)**

Applicant: **Compan Llaneza, Amadeo**
**Avda. Alfonso XIII, 604**
**E-08913 Badalona (Barcelona)(ES)**

(72) Inventor: **Aragall Puig, Miguel**
**Avda. Alfonso XIII, 604**
**E-08913 Badalona (Barcelona)(ES)**
Inventor: **Compan Llaneza, Amadeo**
**Avda. Alfonso XIII, 604**
**E-08913 Badalona (Barcelona)(ES)**

(74) Representative: **Klunker . Schmitt-Nilson .**
**Hirsch**
**Winzererstrasse 106**
**D-8000 München 40(DE)**

(54) Improvements in scales equipped with load measurement cells.

(57) Improvements in weighing scales provided with load measurement cells characterized by the provision of an articulated parallelogram by means of articulated knife blades and composed of plane elements combined to permit movement in one plane according to two coordinate axes and preventing displacement in the perpendicular direction to said plane, in accordance with the third coordinate axis, being coupled by one of the sides to a fixed block of the weighing unit and by the other to the arrangement for transmision of the stress from the weighing plate to the load measurement cell, thus preventing the transmission of transverse stresses to said load measurement cell.

Xerox Copy Centre

## IMPROVEMENTS IN SCALES EQUIPPED WITH LOAD MEASUREMENT CELLS

The present patent application is intended to disclose some improvements in scales and weighing machines of the type which is provided with load measurement cells, providing important advantages with respect to the prior art.

The scales and weighing machines with load measurement cells are based on the action of the weight being exercised on a sensitive element or cell which is capable of transforming the deformations due to traction or torsion into variable electrical pulses which can be received and duly transformed into weight readings.

One disadvantage which at present occurs in the scales of said type is that the load measurement cells are sensible to transverse stresses in such a way that they may suffer damage in the event that the stresses occur in the arrangement of the scale by being transmitted to said load measurement cell.

The present patent application has the object precisely of solving said problem by providing the means to avoid the transmission of said transversal stresses which might cause damage. Therefore, the present improvements provide a system of an articulated parallelogram by means of weighing knife blades which, while being rigid in one direction, are deformable in the other two coordinate axes, thereby permitting the due exercise of the function of transmission of the weighing stress, but making impossible the transmission of said transverse stresses which might be damaging.

The improvements described in the present application are applicable to all types of scales and electronic weighing machines, especially weighing machines of the industrial type, in which the support of the work pieces or material to be weighed has a relatively high weight of its own with respect to the working range of the scale or weighing machine itself.

For better understanding drawings are enclosed which are provided as examples but do not constitute limitation of the improvements explained which are the object of the present application.

Figures 1, 2 and 3 are various views of the device for an articulated parallelogram provided by the present improvements.

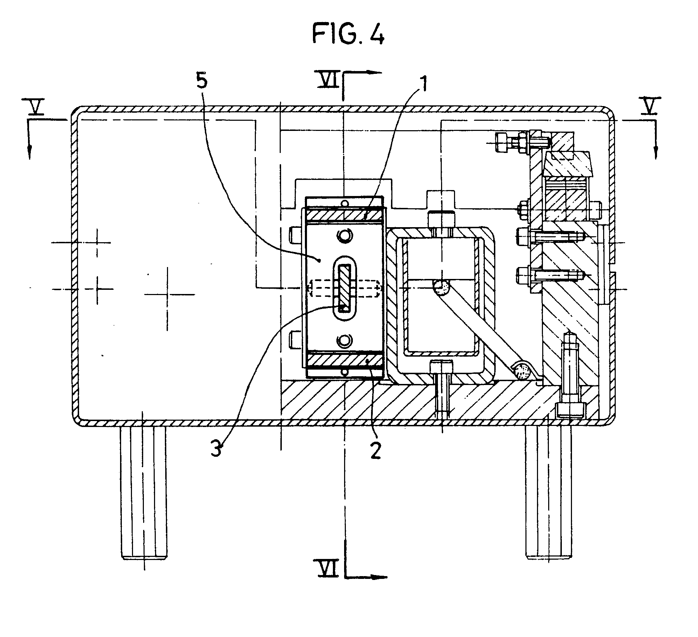

Figures 4, 5 and 6 are various sectional views of the arrangement which can be coupled to the weighing machines for the transmission of the stresses between the support of the work pieces or loads which have to be weighed and the load measurement cell.

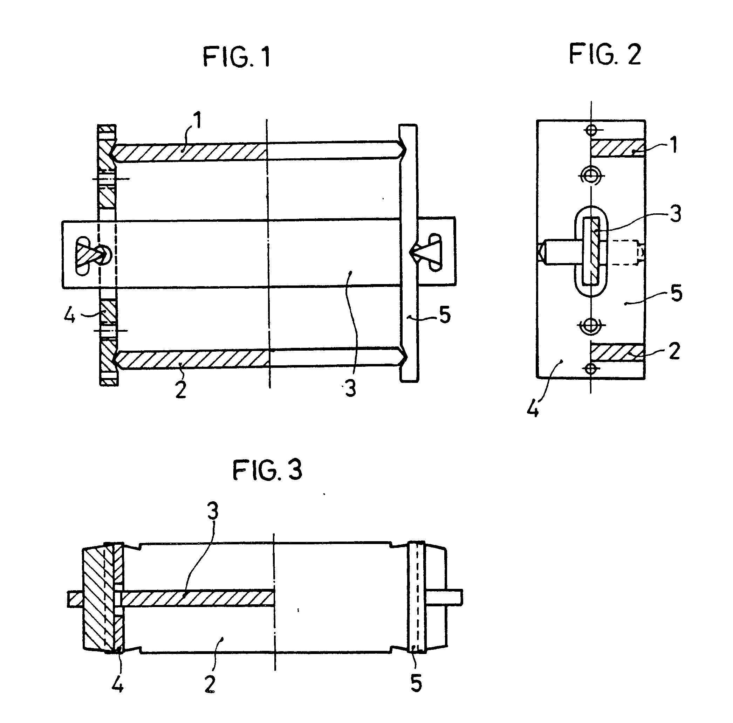

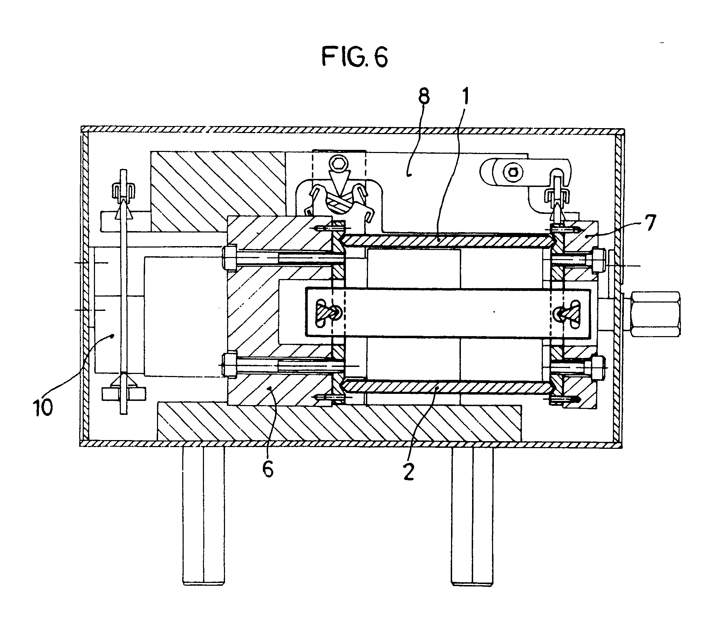

As can be appreciated on inspection of the drawings, the improvements which are the object of the present application provide for an articulated parallelogram, see figure 6, which is composed of the two extreme blades -1- and -2- of a rectangular type and of planar form, which are disposed in parallel with each other and a third blade -3- which is arranged between the first two of them at an angle of 90°, wherein the first two blades are supported against the surfaces -4- and -5- of similar rectangular and planar structure which receive the extremities of the blades in their corresponding bearings, as can be seen from figure 1, and there are also articulated blades on the extremes on the bar -3-in the sense opposed to the articulated blades of the elements -1-and -2-. By this arrangement, the above-mentioned articulated parallelogram can be coupled to the fixed block -6- which is coupled to the surface -4- in a fixed manner by means of pins or similar devices, and wherein at the other extremity, the support -5- is coupled to a piece -7- which is intended for connection with the stress transmission arrangement.

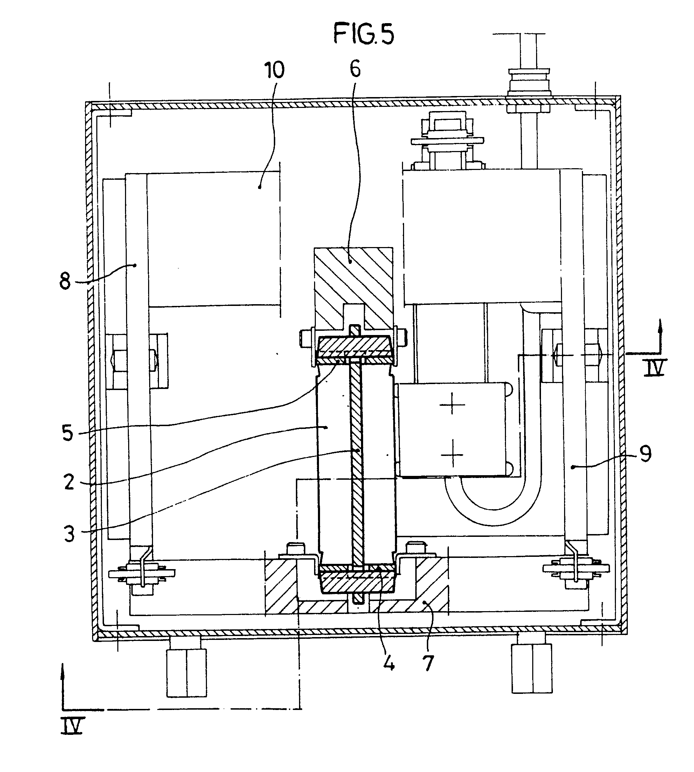

The stress transmission arrangement is comprised of a double swingarm having two arms -8- and -9-, see figure 5, of which the arm -8- is connected to the load measurement device properly speaking, which can be a plate of a balance, a base for a loading funnel etc.

By the arrangement described, it is possible for the load measuremenmt cell not to receive transverse stresses due to the action of the articulated parallelogram as mentioned above, which is deformable in one plane, i.e. according to two coordinate axes, but is not deformable in the direction perpendicular to said plane, i.e. according to the third coordinate plane. In this way the transmission to the load measurement cell of the transverse stresses which might be detrimental to its proper functioning, is avoided.

Within the scope of the present patent application, all the above can be varied provided that it does not affect, alter, change or modify the essence of the improvements described above.

## Claims

1.- Improvements in weighing scales which are provided with load measurement cells characterized in that an articulated parallelogram is provided by means of blade articulations and composed of planar elements combined to permit their movement in one plane in accordance with two coordinate axes and preventing displacement in the perpendicular direction to said plane, according to the third coordinate axis, being coupled by one of the sides to a fixed block of the weighing unit and on the other, to the arrangement for the transmission of stress from the weighing pan to the load measurement cell, thereby preventing the transmission of transverse stresses to said load measurement cell.

2. Improvements in weighing scales provided with load measurement cells, as set forth in claim 1, characterized in that the articulated parallelogram is composed of extreme elements or bearing surfaces on their faces opposite each other, on each side there are bearings for each articulation with double blades which are encased by their extremes in said bearings, which furthermore possess other central bearings for articulated blades in which the supports of a longitudinal beam rest, which is rotated at 90° with respect to the double blades, defining a weighing device without play in one plane and rigid in the perpendicular axis with respect to said plane.

FIG. 1

FIG. 2

FIG. 3

# FIG. 4

# FIG.5

# FIG. 6